# EUROPEAN PATENT SPECIFICATION

(11) **EP 4 405 427 B1**
(45) Date of publication and mention of the grant of the patent: **26.11.2025**
(21) Application number: 22786764.5
(22) Date of filing: 12.09.2022
(51) Int. Cl.: C09D 175/08, B32B 27/40, B32B 27/04, B05D 1/02, C08G 18/66, C08G 18/28, C08G 18/24, C08G 18/32, C08G 18/10, C08G 18/48, C08G 18/76, D06N 3/14, D06N 3/00

(54) **PROCESS FOR PREPARING POLYURETHANE SHEET/LAMINATE WITH REDUCED BUBBLES**
VERFAHREN ZUR HERSTELLUNG VON POLYURETHANPLATTEN/LAMINATEN MIT VERMINDERTEN BLASEN
PROCÉDÉ POUR LA PRÉPARATION DES FEUILLES/LAMINÉS DE POLYURÉTHANE AUX BULLES RÉDUITES

(30) Priority: 23.09.2021 WO PCT/CN2021/119927
(43) Date of publication of application: 31.07.2024
(73) Proprietor: BASF SE, 67056 Ludwigshafen am Rhein (DE)
(72) Inventor: ZHANG, Zhong Kai, Shanghai 200137 (CN); WANG, Dong Liang, Shanghai 200137 (CN)
(74) Representative: BASF IP Association
(86) International application number: PCT/EP2022/075274
(87) International publication number: WO 2023/046512

(56) References cited:
- WO-A1-2013/041397
- CN-A- 109 749 043
- US-A1- 2018 030 650

## Description

### TECHNICAL FIELD

The present invention relates to a process for preparing polyurethane sheet/laminate with reduced bubbles, comprising the steps of applying a polyurethane system obtained by mixing an isocyanate component (A) and a polyol composition component (B) to form a base coat layer, wherein the components (A) and (B) are kept saperately in tanks under vacuum before mixing and the application of the polyurethane system is implemented under relative humidity of 65% or below. The present invention further relates to a polyurethane sheet/laminate prepared by the described process and synthetic leather made from the polyurethane sheet/laminate. The invention is set out in the appended set of claims.

### BACKGROUND

Polyurethane elastomers (PU) are of great industrial importance on account of their excellent mechanical properties and amenability to cost-effective processing. Variation of the input materials makes it possible to obtain different profiles of properties. The synthesis of the polyurethane elastomers may be effected either in stepwise fashion (prepolymer metering method) or by simultaneous reaction of all components in one stage (one-shot metering method). Different polyurethanes for various applications are known in principle from the prior art.

For example, non-solvent polyurethane (PU) system is advantageously used to produce PU sheets/laminates in the production of synthetic leather, which is one of eco-friendly solutions for synthetic leather industry. It normally needs aqueous dispersions to form top coat layer and non-solvent polyurethane sheet as base coat layer. WO2013/041397 discloses a process for production of synthetic leather comprising top coat, polyurethane layer and optional substrate layer, comprising applying one or more than one layer of a top coat to the release layer to an overall top coat layer thickness in the range from 1 to 500 µm. CN104088161B discloses a method for preparing a solvent-free environmentally friendly polyurethane automotive leather. The automotive leather includes a surface layer and a foamed layer. The surface layer and the foamed layer are both two-component solvent-free polyurethane. CN110066373 discloses a solvent-free polyurethane resin for synthetic leather, a preparation method thereof, and application in aqueous/solvent-free polyurethane synthetic leather. CN 109 749 043 A discloses the preparation of non-solvent polyurethane-based synthetic leather, wherein the solvent-free polyurethane resin comprises a resin component A containing polyether polyol with the functionality degree being 2-3 and polyether amine and a resin component B containing contains isocyanate which is the mixture of aromatic isocyanate and aliphatic isocyanate. The solvent-free polyurethane resin for synthetic leather provided by the invention does not M/BASFTR-2594-PC/EP contain any organic solvents, and has low energy consumption and high production efficiency.

Nevertheless, PU sheets/laminates conventioally prepaed by, for example, two-component system via knife coating often have bubble issue. These bubbles could come from physical blending air or the chemical reaction of water with isocyanates, since water is the most commonly used blowing agents in polyurethane industry. In some applications, these bubbles may cause defects, such as applications requring transparency or translucency, like synthetic leather. The products (such as synthetic leather) prepared often include large air bubbles inside the PU base coat layer, which bubbles may have average diameter of 50 µm or higher, or even as large as 100 µm. Besides, the diameter distribution of the bubbles is uneven, and the products thus prepared may have lowered transmittance, and the mechanical properties, such as tear resistance, deteriorate.

Therefore, it is required to provide a process for preparing polyurethane sheet/laminate with reduced bubbles, which exhibits high degree of transmittance, and improved mechanical properties. The polyurethane sheet/laminate thus prepared may be suitably used in may applications, such as in production of synthetic leather.

### SUMMARY OF THE INVENTION

One object of the present invention is to overcome at least some of the the problems in the prior art discussed above and to provide a process for preparing polyurethane sheet/laminate with reduced bubbles, which comprises the following steps:
(i) providing a release layer,
(ii) optionally applying one or more than one layer of a top coat to the release layer to form an overall top coat layer;
(iii) applying a polyurethane system to the release layer or the optional top coat layer to form a base coat layer;
(iv) optionally applying a substrate layer to the base coat layer;
(v) curing the polyurethane system to form a polyurethane layer; and
(vi) separating the release layer from the optional top coat layer or the polyurethane layer, to form a polyurethane sheet/laminate,

wherein the polyurethane system is formed by mixing of an isocyanate component (A) and a polyol composition component (B), and
wherein the components (A) and (B) are kept separately in tanks under vacuum before mixing with each other, and the relative humidity during the application of the polyurethane system in step (iii) is controlled to be 65% or below.

Surprisingly, it has been found by the inventors that the above object may be achieved by the process described Above, especially the combination of keeping components (A) and (B) seperately in tanks under vacuum before mixing and controlling the relative humidity during application of the polyurethane system.

In a preferred embodiment of the present invention, the application of the polyurethane system in step (iii) is implemented by knife coating or casting, preferably by knife coating.

In a preferred embodiment of the present invention, the pressure inside the tanks of the components (A) and (B) is 500 mbar or below, prefrerably 200 mabr or below, more preferably 100 mbar or below, most preferably 60 mbar or below.

In a preferred embodiment of the present invention, the polyol composition component (B) comprises polyetherols and/or polyesterols, particulatly the polyetherols comprise polytetrahydrofuran.

In a preferred embodiment of the present invention, the isocyanate component (A) comprises polyisocyanates, isocyanate prepolymer or mixtures thereof.

In a preferred embodiment of the present invention, the relative humidity during the application of the polyurethane system in step (iii) is controlled to be 45% or below, preferably 35% or below, more preferbly 20% or below.

Another object of this invention is to provide a polyurethane (PU) sheet/laminate prepared from the process described above, comprising
optionally a top coat,
a polyurethane base coat layer, and
optionally a substrate layer,
wherein the polyurethane base coat layer has a bubble area percentage of less than 1.5%.

In a preferred embodiment of the present invention, the polyurethane base coat layer has an average diameter of bubbles in the range of less than 30 µm, preferably less than 20 µm, more preferably less than 10 µm.

In a preferred embodiment of the present invention, the polyurethane base coat layer has an average bubble number per mm² in the range of less than 5/mm², preferably less than 2/mm², more preferably less than 1/mm².

In a preferred embodiment of the present invention, the polyurethane in the polyurethane base coat layer is non-solvent polyurethane.

Another object of this invention is to provide synthetic leather made from the polyurethane sheet/laminate of the present invention, which can be used as the upper or covering material in the application of apparel, accessories, cases, electronic devices, furniture, auto upholstery, sports items or leisure products.

The process according to the present invention enables preparation of polyurethane sheet/laminate with significantly reduced or even invisible bubbles inside the PU base coat layer. The polyurethane sheet/laminate thus prepared may have excellent transmittance, and improved mechanical properties, making it suitable for use in, for example, synthetic leather, or other applications that requires high transmittance.

### DESCRIPTION OF FIGURES

Figure 1 shows a schematic view of the process procedures for preparing polyurethane sheet/laminate comprising a polyurethane base coat layer.
Figure 2 shows SEM images of surface morphology of the PU base coat layers in the PU sheets/laminates prepared in examples of the present invention.

### DETAILED DESCRIPTION OF THE INVENTION

Unless defined otherwise, all technical and scientific terms used herein have the meaning commonly understood by a person skilled in the art to which the invention belongs. As used herein, the following terms have the meanings ascribed to them below, unless specified otherwise.

As used herein, the articles "a" and "an" refer to one or to more than one (i.e., to at least one) of the grammatical object of the article. By way of example, "an element" means one element or more than one element.

As used herein, the term "additives" refers to additives included in a formulated system to enhance physical or chemical properties thereof and to provide a desired result. Such additives include, but are not limited to, dyes, pigments, toughening agents, impact modifiers, rheology modifiers, plasticizing agents, thixotropic agents, natural or synthetic rubbers, filler agents, reinforcing agents, thickening agents, inhibitors, fluorescence or other markers, thermal degradation reducers, thermal resistance conferring agents, surfactants, wetting agents, defoaming agents, dispersants, flow or slip aids, biocides, and stabilizers.

Unless otherwise identified, all percentages (%) are "percent by weight".

The radical definitions or elucidations given above in general terms or within areas of preference apply to the end products and correspondingly to the starting materials and intermediates.

Unless otherwise identified, the temperature refers to room temperature and the pressure refers to ambient pressure.

Unless otherwise identified, the solvent refers to all organic and inorganic solvents known to the persons skilled in the art and does not include any type of monomer molecular.

The present invention provides a process for preparing polyurethane sheet/laminate with reduced bubbles, which comprises the following steps:
(i) providing a release layer,
(ii) optionally applying one or more than one layer of a top coat to the release layer to form an overall top coat layer;
(iii) applying a polyurethane system to the release layer or the optional top coat layer to form a base coat layer;
(iv) optionally applying a substrate layer to the base coat layer;
(v) curing the polyurethane system to form a polyurethane layer; and
(vi) separating the release layer from the optional top coat layer or the polyurethane layer, to form a polyurethane sheet/laminate,

wherein the polyurethane system is formed by mixing of an isocyanate component (A) and a polyol composition component (B), and
wherein the components (A) and (B) are kept separately in tanks under vacuum before mixing with each other, and the relative humidity during the application of the polyurethane system in step (iii) is controlled to be 65% or below.

The process of the present invention comprises providing a release layer in step i). In principle, any layer is useful as release layer that allows polyurethane system components to be applied thereto and reacted to form polyurethane and the resulting polyurethane to be separated again from the release layer.

Release layer thickness is typically in the range from 0.001 mm to 10 mm, preferably in the range from 0.01 mm to 5 mm and more particularly in the range from 0.1 mm to 2 mm.

Suitable release layers are typically known in the pertinent art as "release paper". Examples of suitable release layers are layers, for example foils, of metal, plastic or paper.

In one preferred embodiment, the release layer used is a paper layer optionally coated with a plastic. Preferably, the paper layer here is coated with a polyolefin, preferably polypropylene. Alternatively, the paper layer is preferably coated with silicone.

In an alternative preferred embodiment, the release layer used is a PET layer (= polyethylene terephthalate) optionally coated with a plastic. Preferably, the PET layer here is coated with a polyolefin, preferably polypropylene. Alternatively, the PET layer is preferably coated with silicone.

Examples of suitable release layers are commercially available. Examples of renowned manufacturers in the pertinent art include Warren (Sappi, USA), Binda (Italy), Arjo Wiggins (UK/USA) und Lintec (Japan).

The release layers used may have a smooth or uneven surface. The type of release layer depends on the surface desired for the polymer layer resulting from the process of the present invention. When it is desired for a resulting polyurethane layer to have a smooth surface, the release layer will likewise have a smooth surface. When a resulting polyurethane layer is desired to have an uneven or patterned surface, the release layer will likewise have an uneven or patterned surface.

Preferably, the release layer is patterned such that the product has a leather grain.

Step ii) comprises optionally applying a top coat layer to the release layer. The top coats used can be of the type typically used in the production of PU laminates or synthetic leathers. These comprise polyurethane-based top coats, such as solvent-borne polyurethane coats or waterborne polyurethane dispersion coats, preferably waterborne polyurethane dispersion coats. Suitable coats may be based on a linear MDI-polyether-based polyurethane and be in a state of solution in, for example, DMF. Coats based on aliphatic isocyanates and polyesters or polyethers are likewise conceivable. These coats can be cured by addition of curatives, for example by addition of carbodiimide-based curative. The amount of curative added controls the hardness of the top coat obtained. The hardness of the top coat is preferably conformed to the hardness of the polyurethane layer. Optionally, the polyurethane coats comprise addition agents, such as dyes or pigments. Such polyurethane coats are described for example in EP1905789 and WO2009112168. Examples of waterborne polyurethane coats are Astacin^{®} PR and Astacin^{®} PW from BASF SE or Impranil^{®} from Bayer Material Science. One coat layer can be applied or two or more coat layers can be applied on top of each other, in which case the starting materials for producing the respective coat layers can be the same or different. These coats are preferably applied by casting or by knife coating.

The overall thickness of the coat layers applied to the release layer is in the range from 1 to 500 µm, preferably in the range from 10 to 300 µm and more preferably in the range from 50 to 100 µm.

The coat layer is preferably dried, for example by allowing it to flash off or heating, before the polyurethane system components are applied. In the event that two or more layers of top coat are applied, it is particularly preferable to dry the applied layer before the subsequent layer of top coat is applied.

In one preferred embodiment, step (ii) comprises first applying a top coat skin layer onto the release layer in a thickness of 0-150 µm. The thus formed top coat skin layer is preferably dried, for example by allowing it to pass through an oven. The residence time in the oven may be 1-3 min, , and the temperature inside the oven may be in the range of 80-120°C. Step (ii) may further comprise applying a top coat binder layer onto the top coat skin layer, which is in a thickness of 50-150 µm. Again, the thus formed top coat binder layer is preferably dried, for example by allowing it to pass through an oven. The residence time in the oven may be 2-3 min, and the temperature inside the oven may be in the range of 80-120°C.

Sep (iii) comprises applying a polyurethane system to the release layer or the optional top coat layer to form a base coat layer. The term polyurethane system typically comprises a mixture of an isocyanate component (A) and a polyol composition component (B).

The isocyanate component (A) comprises polyisocyanates (a). The polyisocyanates used comprise the customary aliphatic, cycloaliphatic and, more particularly, aromatic di- and/or polyisocyanates. Preference is given to using tolylene diisocyanate (TDI), diphenylmethane diisocyanate (MDI) and mixtures of diphenylmethane diisocyanate and polyphenylene polymethylene polyisocyanates (polymeric MDI), and especially diphenylmethane diisocyanate (monomeric MDI).

The isocyanates or else hereinbelow described isocyanate prepolymers may also be in a modified state, for example through incorporation of uretidione, carbamate, isocyanurate, carbodiimide or allophanate groups. It is further possible to use blends of the various isocyanates. Carbodiimide-modified isocyanates are preferably used. They are preferably used in an amount of 1% to 20% by weight and more preferably in an amount of 2% to 10% by weight, based on the overall weight of isocyanate component (A).

The polyisocyanates (a) can also be employed in the form of polyisocyanate prepolymers. These prepolymers are known in the prior art. They are prepared in a conventional manner by reacting above-described polyisocyanates (a) with hereinbelow described compounds having isocyanate-reactive hydrogen atoms (b) to form the prepolymer. The reaction may for example be carried out at temperatures of about 80°C. The polyol/polyisocyanate ratio is generally chosen such that the NCO content of the prepolymer is in the range from 6% to 25% by weight, preferably in the range from 8% to 24% by weight and more preferably in the range from 10% to 20% by weight.

A mixture comprising diphenylmethane diisocyanate and polytetrahydrofuran (PTHF), especially PTHF having a number average molecular weight in the range from 1000 to 2500, is used with particular preference as isocyanate component (A). The NCO content of this mixture is preferably in the range from 8% to 22% and more preferably in the range from 10% to 20%.

The polyol composition component (B) may in principle comprise compounds having isocyanate-reactive hydrogen atoms (b). These compounds are such as bearing two or more reactive groups selected from OH groups, SH groups, NH groups, NH₂ groups and carbon-acid groups, for example β-diketo groups, in the molecule. Depending on the choice of compounds having isocyanate-reactive hydrogen atoms (b), the term polyurethanes herein shall comprise polyisocyanate polyaddition products in general, including polyureas for example.

The compounds (b) preferably comprise polyetherols and/or polyesterols. These are commonly known and described for example in "Kunststoffhandbuch Polyurethane" Günter Oertel, Carl-Hanser-Verlag, 2nd edition 1983, chapter 3.1.1. Alternative designations likewise customary in the pertinent art are polyether polyols or polyether alcohols on the one hand and polyester polyols or polyester alcohols on the other.

When polyesterols are employed, these are typically obtained by condensation of polyfunctional alcohols having from 2 to 12 carbon atoms, preferably from 2 to 6 carbon atoms, with polyfunctional carboxylic acids having from 2 to 12 carbon atoms, examples being succinic acid, glutaric acid, adipic acid, suberic acid, azelaic acid, sebacic acid, decanedicarboxylic acid, maleic acid, fumaric acid and preferably phthalic acid, isophthalic acid, terephthalic acid and the isomeric naphthalenedicarboxylic acids.

When polyetherols are employed, these are generally obtained by known methods, for example by anionic polymerization using alkali metal hydroxides as catalysts and with addition of a starter molecule comprising multiple reactive hydrogen atoms in attachment, from one or more alkylene oxides selected from propylene oxide (PO) and ethylene oxide (EO), butylene oxide and tetrahydrofuran.

Useful polyetherols (b) further include so-called low-unsaturation polyetherols. Low-unsaturation polyols for the purposes of this invention are more particularly polyether alcohols comprising less than 0.02 meq/g and preferably less than 0.01 meq/g of unsaturated compounds. Polyether alcohols of this type are obtained via addition of ethylene oxide and/or propylene oxide and mixtures thereof onto at least difunctional alcohols in the presence of so-called double metal cyanide catalysts.

The alkylene oxides may be used individually, alternatingly in succession or as mixtures. The use of an EO-PO mixture leads to a polyether polyol having randomly distributed PO/EO units. It is possible to begin by using a PO-EO mixture and then, prior to termination of the polymerization, continue use of just PO or EO, the product then being a polyether polyol having a PO endcap or, respectively, an EO endcap.

Starter molecules used are typically NH- or OH-functional compounds such as water, amines or alcohols. Preference is given to using di- to hexahydric alcohols, such as ethanediol, 1,2-propanediol, 1,3-propanediol, diethylene glycol, dipropylene glycol, 1,4-butanediol, 1,6-hexanediol, glycerol, trimethylolpropane, pentaerythritol and/or sorbitol.

It is further preferable to use polyetherols obtained by ring-opening polymerization of tetrahydrofuran. These polytetrahydrofurans preferably have a functionality of about 2. They preferably further have a number average molecular weight in the range from 500 to 4000 g/mol, preferably in the range from 700 to 3000 g/mol and more preferably in the range from 900 to 2500 g/mol. Polytetrahydrofuran (= PTHF) is also known in the pertinent art under the designations tetramethylene glycol (= PTMG), polytetramethylene glycol ether (= PTMEG) or polytetramethylene oxides (= PTMO).

In addition to the abovementioned polyether polyols, the polyol composition component (B) may also comprise customary chain extender, by which this invention understands compounds having 2 or more isocyanate-reactive hydrogen atoms and molecular weights in the range from 42 to less than 400 g/mol.

In one preferred embodiment, the polyol composition component (B) comprises one or more constituents selected from
(b-1) a polyol, preferably a polyether polyol, having a number-average molecular weight in the range from 500 g/mol to less than 3000 g/mol
(b-2) a polyol, preferably a polyether polyol, having a number-average molecular weight in the range from 3000 g/mol to 8000 g/mol
(b-3) a chain extender having a molecular weight of less than 400 g/mol.

In one preferred embodiment, component (b-1) comprises a polyetherol or a polyesterol, more preferably a polyether polyol, having a number average molecular weight in the range from 500 to less than 3000 g/mol, preferably in the range from 800 to 2500 g/mol, and more preferably in the range from 1000 to 2200 g/mol as components (b1).

The components (b-1) typically have an average functionality of 1.8 to 3, more preferably of 1.9 to 2.1 and especially of 2.0. Functionality here refers to the "theoretical OH functionality" calculated from the functionality of the starter molecules used.

Polytetrahydrofuran is more preferably used as component (b-1). More particularly, polytetrahydrofuran having a number average molecular weight in the range from 1000 to 2000 g/mol is used.

The components (b-1) is typically present in component (B) in an amount from 30% to 100% by weight and preferably from 50% to 90% by weight, based on the overall weight of compounds having isocyanate-reactive hydrogen atoms (b).

In one preferred embodiment, components (b2) utilize a polyetherol or a polyesterol and more preferably a polyether polyol having a number average molecular weight in the range from 3000 to 8000 g/mol, preferably in the range from 3500 to 7000 g/mol and more preferably in the range from 4000 to 6000 g/mol as a compound having isocyanate-reactive hydrogen atoms (b).

The components (b-2) typically have an average functionality of 1.9 to 6, more preferably of 2.3 to 4 and especially of 3.0. Functionality here refers to the "theoretical OH functionality" calculated from the functionality of the starter molecules used.

Component (b-2) is more preferably a polyether polyol obtainable by propoxylation and/or ethoxylation of glycerol or trimethylolpropane, especially with an EO endblock. This polyether polyol preferably has a number average molecular weight in the range from 4500 to 6000 g/mol.

The component (b-2) is typically present in component (B) in an amount from 5% to 80% by weight and preferably from 10% to 30% by weight, based on the overall weight of compounds having isocyanate-reactive hydrogen atoms (b).

The polyol composition component (B) may further comprise chain extender as component (b-3). Suitable chain extenders are compounds having two or more isocyanate-reactive hydrogen atoms and a molecular weight below 400 g/mol and are known in the prior art. Preference is given to using 2-functional alcohols having molecular weights below 400 g/mol and especially in the range from 60 to 150 g/mol. Examples are ethylene glycol, propylene glycol, diethylene glycol, 1,4-butanediol, dipropylene glycol, tripropylene glycol. 1,4-Butanediol is preferably used.

The chain extender is typically used in an amount from 2% to 25% by weight, preferably from 3% to 13% by weight and more preferably from 3% to 20% by weight, based on the overall weight of compounds having isocyanate-reactive hydrogen atoms (b).

In one embodiment, the reaction of the isocyanate component (A) and polyol composition component (B) takes place in the absence of a blowing agent. The resulting polyurethane layer will then be a compact polyurethane. Compact polyurethane in the context of this invention refers to polyurethanes obtained without addition of blowing agents. The polyurethane layer resulting in this embodiment typically has a density in the range from 0.6 to 1.2 kg/liter and preferably in the range from 0.8 to 1.1 kg/liter.

As the case may be, the polyol composition component (B) used for technical reasons may comprise a small proportion of residual water. This will be particularly the case when no water scavenger is used as component (c). The residual water content is preferably below 0.2% by weight and more preferably below 0.1% by weight, based on the overall weight of component (B) used. Water may act as a blowing agent in the reaction to prepare polyurethane, and cause bubbles in the PU obtained. Preferably, the polyol composition component (B) used comprises no water.

In one preferred embodiment, the polyol composition component (B) comprises water scavengers (c). The customary water scavengers known in the field of polyurethane chemistry are suitable in general. Examples of suitable water scavengers are zeolites, especially in the form of zeolite pastes (an example being Baylith^{®} L Paste 3A).

Water scavengers (c) are typically used in an amount from 0.1% to 3% by weight and preferably from 0.3% to 1% by weight, based on the overall weight of component (B).

In one preferred embodiment, the polyol composition component (B) comprises fillers (d). The customary fillers known in the field of polyurethane chemistry are suitable in general. Examples of suitable fillers are glass fibers, mineral fibers, natural fibers, such as flax, jute or sisal for example, glass flakes, silicates such as mica or glimmer, salts, such as calcium carbonate, chalk or gypsum.

It is preferable to use fillers which create cracks in the resulting polyurethane layer on its being subjected to orientation. These cracks generally lead to enhanced breathability. It is particularly preferable to use calcium carbonate as filler.

The fillers (d) are typically used in an amount from 0.5% to 60% by weight and preferably from 3% to 10% by weight, based on the overall weight of component (B).

In one preferred embodiment, the reaction of components (A) and (B) takes place in the presence of a catalyst (e). This is more preferably a constituent part of component (B). The customary and known polyurethane formation catalysts are optionally used as catalysts for producing the polyurethane layers of the present invention, examples being organotin compounds, such as tin diacetate, zinc carboxylate, dibutyltin dilaurate, and/or strongly basic amines such as diazabicyclooctane, triethylamine, or preferably triethylenediamine or bis(N,N-dimethylaminoethyl) ether. The constituent (e) is typically used in an amount from 0.01% to 5% by weight and preferably from 0.05% to 4% by weight, based on the overall weight of component (B).

In one preferred embodiment, the catalysts comprise at least a non-tin metal compound (e-1) and an amine-based catalyst (e-2). The component (e-1) comprises at least one from zinc, bismuth or calcium contained organic metal catalyst, more preferably a zinc organic metal catalyst. The component (e-1) is typically present in polyol composition component (B) in an amount from 0.01% to 10% by weight, preferably from 0.05% to 5% by weight and more preferably from 0.05% to 1% by weight, based on the overall weight of polyol composition component (B).

The component (e-2) typically has a thermally activatable catalyst which ensures a long open time for applying the polyurethane system components and yet rapid curing at elevated temperature. Thermally activatable catalysts are known and comprise for example acid-blocked, for example carboxylic acid-blocked and especially formic acid-blocked amine catalysts, for example tertiary amine catalysts, N-acetylated amine catalysts. These are obtainable for example by reaction of acids with bases, in the presence or absence of a solvent. Such catalysts are known and are described for example in US4582861, US4232152, US4366084, US4450246, US4617286, DE19512480, EP0989146, US6525107, US5770635. In the case of acid-blocked catalysts, the acid component used is preferably carboxylic acids, particularly oleic acid, formic acid, acetic acid, ethylhexyl acid, phenol, ricinoleic acid, linoleic acid and/or p-toluenesulfonic acid. By way of amine catalysts to be blocked it is preferable to use triethylenediamine, dimethylamino-N-methylpiperazine, N,N-diphenyl-N-methylamine, bis(N,N-dimethylaminoethyl) ether, N,N-dimethylaminoethoxyethanol and/or DBU. These blocked catalysts are usually present in a solvent/dispersant. Glycols, such as propylene glycol, dipropylene glycol, ethylene glycol and/or diethylene glycol, are preferably suitable as solvent/dispersant. The component (e-2) is typically present in polyol composition component (B) in an amount from 0.01% to 10% by weight, preferably from 0.05% to 5% by weight and more preferably from 0.05% to 1% by weight, based on the overall weight of polyol composition component (B).

The catalyst is preferably selected such that applying the polyurethane system by knife coating achieves an open time of at least one minute, more preferably at least 10 minutes and more particularly at least 15 minutes at 23°C and 50% relative humidity.

The reaction of components (A) and (B) optionally takes place in the presence of further auxiliary and/or addition agents (f) known in the production of polyurethanes, examples being cell regulators, plasticizers, release agents, pigments, surface-active compounds and/or stabilizers against oxidative, thermal, hydrolytic or microbial degradation or aging. These are preferably likewise a constituent part of component (B). In one preferred embodiment, the polyurethane system components (A) and/or (B) may comprise plasticizers. The generally customary plasticizers known for polymers can be used in principle. Examples of suitable plasticizers are derivatives of phthalic acid, of cyclohexanedicarboxylic acid, alkylsulfonic esters of phenol, and also derivatives of citric acid.

The polyurethane layer here may be effected by applying a layer of polyurethane system components and also optionally further layers of polyurethane system components. Preferably, only one layer of polyurethane system components is applied to the top coat layer.

When two or more layers of polyurethane system components are applied, the second and each further layer are preferably applied to the underlying layer of polyurethane system components. This underlying layer of polyurethane system components may already be cured to such an extent before applying a further layer that the underlying layer is no longer fluent; alternatively, however, it may also still be fluent. Preferably, the underlying polyurethane layer at the time of applying the next polyurethane layer is no longer fluent but only cured to such an extent that it will adhere to a wooden spatula when contacted therewith. The curing of polyurethane system components may for example be speeded by heating or by irradiation, for example with microwave radiation or infrared radiation.

The polyurethane system components for forming the first and any one of the respectively further polyurethane layers can be the same or different. The polyurethane layers are preferably produced by utilizing the same isocyanates (a) and polyols (b) in each case. It is particularly preferable for the polyurethane system components for forming the first polyurethane layer to differ from those for forming the second polyurethane layer in the isocyanate index only.

The process of the present invention generally has components (A) and (B) being reacted in such amounts that the equivalence ratio of NCO groups to the sum total of isocyanate-reactive hydrogen atoms is in the range from 0.8:1 to 2:1 and preferably in the range from 0.9:1.0 to 1.6:1. A ratio of 1:1 here corresponds to an NCO index of 100. It is preferable that the equivalence ratio of NCO groups to the sum total of reactive hydrogen atoms in the polyurethane system components for forming the polyurethane layer which is in direct contact with the top coat is in the range from 0.8:1 to 2:1, preferably in the range from 0.9:1.0 to 1.6:1, which corresponds to an isocyanate index in the range from 80 to 200, preferably in the range from 90 to 160.

In one preferred embodiment, the polyurethane system components comprise essentially no solvent. In other words, not only the components (a) and (b) but also the components (c), (d), (e) and (f) comprise essentially no solvent. "Essentially no solvent" is to be understood as meaning that, apart from possibly manufacture-based impurities, they comprise no solvent and that no solvent was added to the components. The solvent content is thus below 1% by weight, preferably below 0.1% by weight and more preferably below 0.01% by weight, based on the overall weight of components (a) to (f).

The term "solvent" is common knowledge in the pertinent art. Solvent for the purposes of the present invention is to be understood in the widest sense as comprehending organic and inorganic liquids capable of dissolving other solid materials in a physical way. The prerequisite for a material to be useful as a solvent is that neither the dissolving material nor the dissolved material undergoes chemical changes in the course of the process of dissolution. Thus, the dissolved component can be recovered by physical methods of separation, such as distillation, crystallization, sublimation, evaporation and/or adsorption for example.

In one preferred embodiment, the polyurethane system components comprise essentially no organic solvent. More particularly, the polyurethane system components comprise essentially no ether or glycol ether (such as diethyl ether, dibutyl ether, anisole, dioxane, monomeric tetrahydrofuran), ketones (such as acetone, butanone, cyclohexanone), esters (such as ethyl acetate), nitrogen compounds (such as dimethylformamide, pyridine, N-methylpyrrolidone, acetonitrile), sulfur compounds (such as carbon sulfide, dimethyl sulfoxide, sulfolane), nitro compounds (such as nitrobenzene), (hydro)halocarbons (such as dichloromethane, chloroform, tetrachloromethane, trichloroethene, tetrachloroethene, 1,2-dichloroethane, chlorofluorocarbons), hydrocarbons, preferably with boiling point above 60°C (such as octane, methylcyclohexane, decalin, benzene, toluene, xylene).

It is an essential feature of the present invention that component (A) and component (B), before mixing with each other, are kept separately in tanks under certain degree of vacuum. For instance, the tanks to store the component (A) and component (B) separately may be vacuum-pumped to an extent that the pressure inside the tanks is 500 mbar or below, preferably 200 mbar or below, more preferably 100 mbar or below, and most preferably 60 mbar or below. An extraction pump may be connected to the tank to extract air from the tank, and pressure inside the two tanks may be the same or different. Such extraction pump can be commercially available as EVE-TR X from Schmalz. The vacuum applied to the tanks substantially reduces air blended into the liquid raw materials in the tanks. The lower the pressure inside the tanks is, the better the bubble-reducing effect can be obtained.

The raw materials from components (A) and (B) are poured out of each storing tank to mix with each other in a speed mixer. The residence time in the speed mixer is short, typically 2 min. It is not necessary to apply vacuum in the mixer given the short residence time in the mixer.

After mixing of the two components (A) and (B), the mixture thus formed is applied onto the release layer or the optional top coat layer. The application of the polyurethane system components to produce the polyurethane layer and also of the optional further polyurethane system components is preferably done uniformly, i.e., the polyurethane system components are applied such that the entire surface of the release layer or the optional top coat layer is covered with polyurethane system components.

The polyurethane system components can generally be applied using any suitable method whereby it is possible to apply a layer of polyurethane system components which are curable to a polyurethane layer of suitable thickness. Preferably, the material applied is spread to a homogeneous layer thickness by knife coating with scrapers, for example spatulas. The material can further also be applied via casting.

In one embodiments of the present invention, the polyurethane system components are applied in the process of the present invention in an amount such that the resulting polyurethane layer has a thickness in the range from 0.01 mm to 2 mm, preferably in the range from 0.05 mm to 1 mm and more preferably in the range from 0.1 mm to 0.8 mm. The overall thickness of the polyurethane layer and of optional further polyurethane layers is less than 10 mm, preferably in the range from 0.05 to 5 mm and more preferably in the range from 0.1 mm to 2 mm. This does not include the thickness of the top coat even when the top coat is a polyurethane-based top coat.

It is another essential feature of the present invention to control the relative humidity of the space where the application of the polyurethane system components is implemented. For instance, when the polyurethane system components are applied by knife coating, the relative humidity is controlled to be no more than 65%, preferably no more than 45% or 35%, more preferably no more than 25% or 20%. The control of the relative humidity during application of the polyurethane system components reduces water entrained from the surrounding environment, and thus facilitates further reduction of bubbles generated in the PU layer. The control of the relative humidity may be accomplished by industrial air conditioning system in the plant, or other applicable industry devices.

Without bonding to any particular theory, the combination of vacuum-pumping in the storage tanks of the components (A) and (B) and the control of the relative humidity during application of the polyurethane system results in PU layer with significantly reduced air bubble, or even invisible bubbles in the PU base coat layer.

The polyurethane base coat layer thus formed may be optionally dried in an oven to further remove water from the layer. The oven can be a single oven or series of multiple ovens to form a dry tunnel. The residence time in such dry tunnel may be 1-3 min, and the temperature inside the dry tunnel may be set in the range of 70-120°C, preferably 80-100°C. The dry tunnel may be optionally vacuum-pumped as is the case in the tanks; however, such vacuum inside the dry tunnel is not mandatory. If vacuum is applied, the pressure inside the dry tunnel may be 400 mbar or below, preferably 200 mbar or below, more preferably 100 mbar or below.

The step (iv) of the process according to the present invention comprises optionally applying a substrate layer to the polyurethane base coat layer. The substrate layer is preferably applied as long as the polyurethane system components are not fully cured, i.e., as long as there is still an ongoing reaction of isocyanate groups with OH groups.

In principle, the substrate layer can be any layer capable of forming an adhering bond with the resulting polyurethane layer.

Substrate layer thickness is typically in the range from 0.01 millimeters (mm) to 20 mm, preferably in the range from 0.1 mm to 10 mm and more particularly in the range from 0.3 mm to 5 mm.

Examples of suitable release layers are layers, for example foils, of metal, plastic, leather and/or textile materials.

Various kinds of substrate layers are possible for the process of the present invention, examples being:
A fabric substrate layer: In this case the substrate layer can consist of one or more, identical or different, firmly interconnected plies, for example of narrowly or widely meshed wovens, knits, braids, networks (net cloths).

Batt substrate layer: sheetlike structures composed of randomly disposed fibers (examples being felts and fibrous webs), which may preferably be bound together by a binder. Batt substrate layers are usually cellulosic or textile batts consolidated with water-insoluble impregnants.

Fibrous substrate layer: articles of manufacture composed of loose, randomly disposed fibers which are consolidated by plastics being used as a binder. They are obtained for example by adhering together leather fibers (preferably obtainable from leather waste, for example from vegetable-tanned leather) with 8-40% by weight of a binder.

Foil substrate layer: articles of manufacture comprising (preferably homogeneous) foils composed of metal or plastic, for example rubber, PVC, polyamides, interpolymers and the like. A foil substrate layer preferably comprises no incorporated fiber.

One preferred embodiment utilizes a leather layer as substrate layer. When a leather layer is used, the leather in question is preferably split leather.

When a textile layer is used, the following materials will be particularly suitable to produce the textile layer: cotton, linen, polyester, polyamide and/or polyurethane.

Applying the substrate layer is preferably done as long as the most recently applied polyurethane system components are still fluent or are already cured to such an extent that they are no longer fluent but adhere to a wooden spatula on contact therewith.

The substrate layer is applied to the polyurethane system components by bringing the former into contact with the latter and pressing. The contact pressure is preferably between 0.01 and 6 bar and more preferably between 0.05 and 5 bar. The pressing time is between 0.1 sec and 100 sec and preferably between 0.5 sec and 15 sec.

When the polyurethane system components of the most recently applied polyurethane layer are already in a cured state, the substrate layer can also be applied to the polyurethane layer with the aid of a customary adhesive. Examples of such preferably solvent-free adhesives are one-component polyurethane adhesives or two-component polyurethane adhesives.

Step (v) of the process according to the present invention comprises curing the polyurethane system components to form the polyurethane layer. This curing may be hastened by temperature elevation, for example in an oven, or by irradiation, for example with microwave radiation or infrared radiation.

In one preferred embodiment, the curing is effected at temperatures in the range from 80 to 130°C, preferably 90 to 120°C.

The curing operation continues until the reaction of isocyanate groups with OH-functional groups is essentially complete. The duration of the curing operation is preferably in the range from 0.5 to 20 minutes, more preferably in the range from 1 to 10 minutes and more particularly in the range from 2 to 5 minutes.

If desired, the material may subsequently be further conditioned at 60-100°C for up to 24 hours.

Step (vi) of the process according to the present invention comprises separating the release layer from the polyurethane layer. The separating may be effected by the customary methods known in the prior art. For example, the release layer is peeled off the polyurethane layer. This polyurethane layer is preferably in a fully cured state before the release layer is separated off.

The process of the present invention may be carried out as a continuous operation or as a batch operation. It is preferably carried out as a continuous operation.

Continuous in this context is to be understood as meaning that the release layer and, if used, the substrate layer are present in the form of bands which are continuously advanced and treated according to the process of the present invention. The bands are generally from 10 to 500 meters and preferably from 20 to 200 meters in length. The band speed is typically in the range from 5 to 15 m/min.

In one continuous process of the present invention, the release layer forms a quasi release band. The release layer is preferably unwound off a spindle at the start of the process, the release layer removed from the polyurethane layer in the process of the present invention may preferably be wound up again on a spindle. This wound-up release layer may be reused in the process of the present invention; that is, it is reusable. The wound-up release layer is preferably reused at least 2 to 5 times.

In one continuous process of the present invention, the substrate layer forms a quasi substrate band. The substrate layer is preferably unwound off a spindle at the start of the process.

This continuous process of the present invention provides polyurethane sheet/laminate comprising optional top coat, polyurethane base coat layer and optional substrate layer, as a process product which is likewise present in the form of a band. The product obtained is preferably wound up on a spindle.

When the process of production is continuous, the layer of a top coat can be applied by spraying, by knife coating or by a wide slot die. The polyurethane system may subsequently be applied by spraying or by knife coating. Any combination of these production variants is possible.

The present invention further provides a polyurethane sheet/laminate obtainable by the process of the present invention. The polyurethane sheet/laminate obtainable in the process of the present invention comprises optional top coat layer, at least one polyurethane base coat layer and optional substrate layer, wherein the polyurethane base coat layer comprises significantly reduced bubbles or even no visible bubbles as determined by SEM. The polyurethane layer thus formed exhibits high transmittance. Besides, the mechanical properties can be improved as a result of the reduction of the bubbles.

As determined by SEM, the polyurethane base coat layer in the polyurethane sheet/laminate obtainable by the process of the present invention may have a bubble area of less than 1.5%, preferably less than 0.5%, and more preferably less than 0.1%, and have an average bubble number per mm² of less than 5/mm², preferably less than 2/mm², and more preferably less than 1/mm². The average bubble diameter in the polyurethane base coat layer is less than 30 µm, preferably less than 20 µm, more preferably less than 10 µm. In a further preferred embodiment, the polyurethane base coat layer in the polyurethane sheet/laminate obtainable by the process of the present invention basically comprises no invisible bubbles as determined by SEM. The polyurethane base coat layer may have a thickness in the range from 0.01 to 10 mm, preferably from 0.05 to 5 mm, more preferably from 0.1 to 2 mm.

The present invention further provides a synthetic leather obtainable from the process of the present invention, or made from the polyurethane sheet/laminate of the present invention. The synthetic leather may have the same structure as the inventive polyurethane sheet/laminate, i.e., comprising optional top coat layer, at least one polyurethane base coat layer and optional substrate layer. In one preferred embodiment, the synthetic leather of the present invention, which is obtainable in the process of the present invention, is oriented. "Oriented" in this context is to be understood as meaning that the polyurethane layer in the solid state is subjected to tension or pressure in one or two directions (= mono- or uniaxial and biaxial orientation respectively). This orientation leads to an enlargement of the dimensions by a factor of up to 10, preferably to an enlargement of the dimensions by up to a factor in the range from 1.1 to 5 and more preferably to an enlargement of the dimensions by up to a factor in the range from 1.2 to 2.

The orientation preferably leads to an improvement in the breathability of the synthetic leather of the present invention. The breathability of this synthetic leather is preferably in the range from 0.5 to 15 mg/cm² and more preferably in the range from 3.5 to 8.5 mg/cm², as measured to DIN EN ISO 14268.

The polyurethane sheet/laminate and the synthetic leather of the present invention are useful for numerous applications. In a further preferred embodiment, the synthetic leather of the present invention is used for coating of textiles. The present invention thus also provides for the use of a synthetic leather according to the present invention for coating of textiles. The synthetic leather of the present invention is further used for production of furniture.

The synthetic leather of the present invention has outstanding mechanical properties, such as flexing endurance properties, tongue tear strength, stretch and an outstanding bond between the top coat and the polyurethane layer in particular. Examples include the upper or covering material in the application of apparel, accessories, cases, electronic devices, furniture, auto upholstery, sports items or other leisure products.

The examples which follow illustrate the invention.

### Examples

The present invention will now be described with reference to Examples and Comparative Examples, which are not intended to limit the present invention.

The following raw materials were used:
**Top coat**: MDI-polyether-based, linear polyurethane in DMF
**Isocynate**: Prepolymer based on monomeric MDI and polytetrahydrofuran with an OH number of 56 mg KOH/g
**Polyol 1** is polyether polyol capped with primary hydroxyl, with molecular weight (g/mol) of 4000-6000, and hydroxyl number (OHv) of 30 - 40 mg KOH/g
**Polyol 2** is polyether polyol capped with primary hydroxyl, with molecular weight (g/mol) of 2000-4000, and hydroxyl number (OHv) of 25- 35 mg KOH/g
**Chain extender:** 1,4-butanediol
**Catalyst**: Zinc carboxylate (90-100%) and diethylene glycol monoethyl ether (5-<10%)
**Stabilizer**: Niax Silicone L-5302
**Release paper**: Favini B100 from Favini

**The following test method were used**
Evaluation of bubbles in PU layer: The PU laminate formed is determined with SEM, and the morphology of the surface of the PU base coat layer is analyzed by as follows: using confocal plus stiching to get three 10.81 ×10.31 mm pictures from the SEM image; cutting each picture into 9 small pieces and downsizeing for analyzation, total 81 small pictures for 3 samples; using filter and trainable weka segmentation for hole recognization; transforming the images into mask; and analyzing bubbles from the mask and getting statistic results.
Transmittance: Transmittance of the PU base coat layer was tested using a transmittance tester TM2000 from Tint Meter with the test method according to ASTM D 1003-2013.
Haze: Haze was tested in accordance with ASTM D 1003-2013.

The following components were used to prepare non-solvent polyurethane layer:

**Table 1: Formulation of non-solvent polyurethane system (parts by weight)**

| Component (B) | | | | | | Component (A) |
|---|---|---|---|---|---|---|
| Polyol 1 | Polyol 2 | Chain extender | Catalyst | Stabilizer | total | Isocyanate |
| 52.4 | 45 | 2 | 0.2 | 0.4 | 100 | 60 |

### Preparation of the PU sheet/laminate

A release paper traveled at a speed of 10m/min across a continuous rig for PU laminate production. A commercially customary spray gun was used to apply to the release paper a polyurethane coating layer about 50 micrometers in thickness to form the top coat. The coating layer was dried in the oven at the temperature of 80-120°C into which the material was conveyed after application of the coating and delayed therein for about 3 minutes. Thereafter, an approximately 250 micrometers thick layer of the non-solvent polyurethane reactive system (the formulation in Table 1) was applied with knife coating. The material was subsequently led through an oven temperature controlled to 100-120°C only to reemerge from it after about 90s. Thereafter, a textile substrate was applied, under slight pressure, to the still incompletely cured polyurethane. Subsequently the polyurethane was cured in the 3rd oven at 100°C ~120°C and reemerged from the oven after 10 min. Thereafter, the final PU laminate was peeled off from the release paper

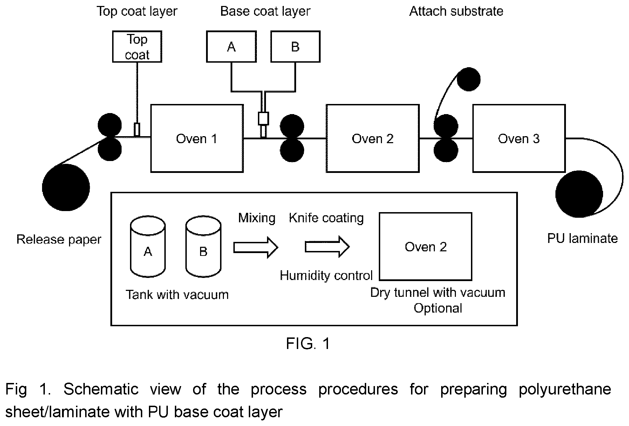

Processing procedures of the process refers to Fig. 1.

Before mixing and application of the non-solvent polyurethane reactive system, the two components (A) and (B) were stored in two separate tanks which were vacuum-pumped or not vacuum-pumped to be under different pressures in the inventive examples and comparative examples. During knife coating of the polyurethane reactive system, the relative humidity was controlled by industry air-conditioning system at different degree for the examples. The pressures in the the dry tunnel were also adjusted by vacuum-pump for the examples. The processing parameters of the step (iii) in the examples were listed in the tables below. The PU laminates thus obtained in all the examples were tested using test methods described above, and the results are also summarized in the tables below.

**Table 2:**

| Examples | R.H.during knife coating (%) | Pressure inside tanks (mbar) | Pressure inside the drying tunnel (mbar) | Average bubble number per mm² | Average bubble size (µm) | Percentage of bubble area (%) |
|---|---|---|---|---|---|---|
| 1 | 10% | ambient pressure | ambient pressure | 5.17 | 31.92 | 1.7 |
| 2 | 10% | 50mbar/3h | ambient pressure | 0 | 0 | 0 |
| 3 | 10% | 50mbar/3h | 50mbar/10min | 0 | 0 | 0 |
| 4 | 40% | ambient pressure | ambient pressure | 16.21 | 33.47 | 6.13 |
| 5 | 40% | 50mbar/3h | ambient pressure | 0 | 0 | 0 |
| 6 | 40% | 50mbar/3h | 50mbar/10min | 0 | 0 | 0 |
| 7 | 65% | ambient pressure | ambient pressure | 17.86 | 34.78 | 7.35 |
| 8 | 65% | 50mbar/3h | ambient pressure | 0 | 0 | 0 |
| 9 | 65% | 50mbar/3h | 50mbar/10min | 0 | 0 | 0 |

| | | | | | | |
|---|---|---|---|---|---|---|
| * The value of 0 means no visible bubbles could be recognized from the SEM image. | | | | | | |

The bubble characteristics of the PU base coat layer at different pressures in the tanks were also analyzed under fixed relative himidity as follows:

**Table 3:**

| Example s | R.H.duri ng knife coating (%) | Pressure inside tanks (mbar) for 3 hours | Average bubble number per mm² | Average bubble size (µm) | Percent age of bubble area (%) | Transmitt ance (%) | Haze (%) |
|---|---|---|---|---|---|---|---|
| 10 | 35% | ambient pressure | 13.71 | 26.93 | 3.71 | 88.4 | 53.4 |
| 11 | 35% | 20 | 0* | 0 | 0 | | |
| 12 | 35% | 60 | 0 | 0 | 0 | 94.7 | 16.8 |
| 13 | 35% | 100 | 0 | 0 | 0 | | |
| 14 | 35% | 200 | 0 | 0 | 0 | | |
| 15 | 35% | 400 | 0 | 0 | 0 | | |
| 16 | 35% | 500 | 0 | 0 | 0 | 92.1 | 19.2 |

| | | | | | | | |
|---|---|---|---|---|---|---|---|
| * The value of 0 means no visible bubbles could be recognized from the SEM image. | | | | | | | |

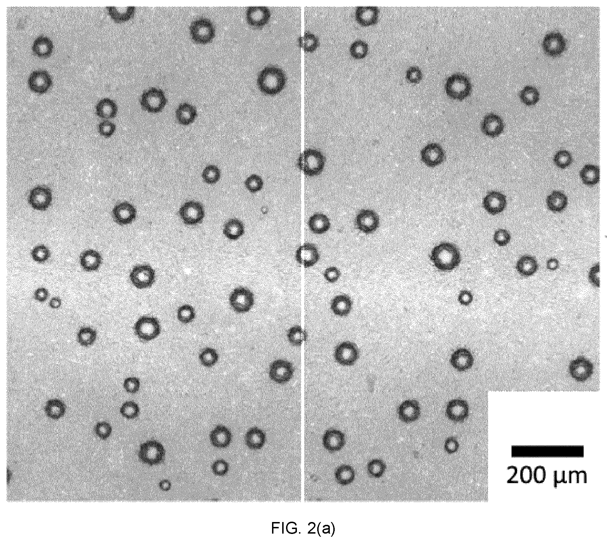

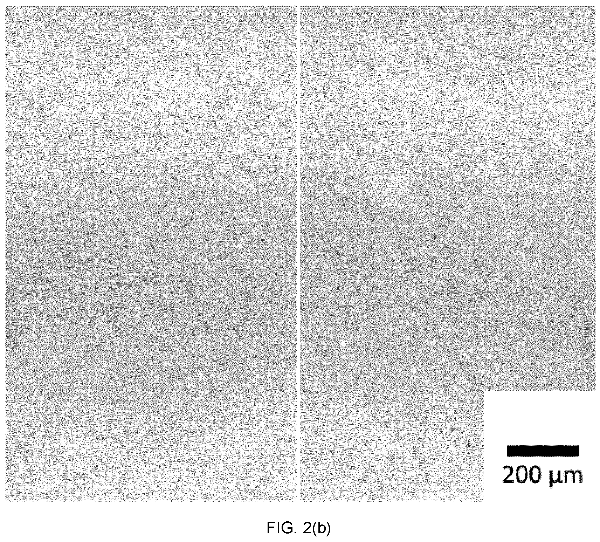

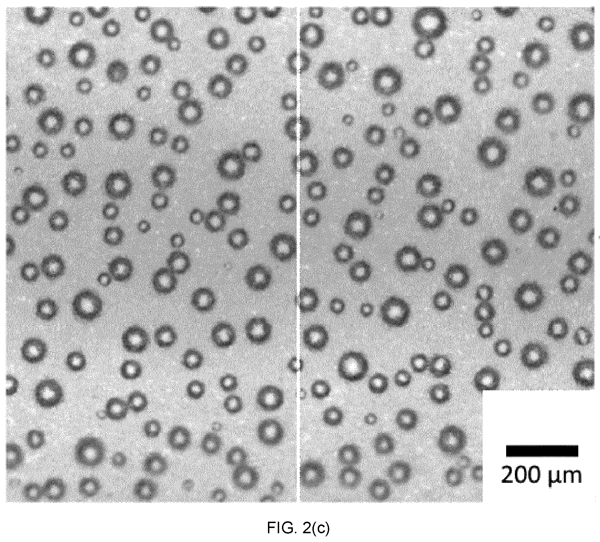

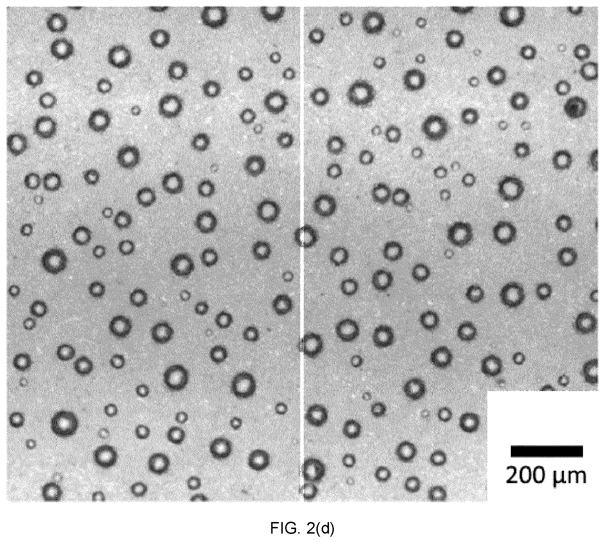

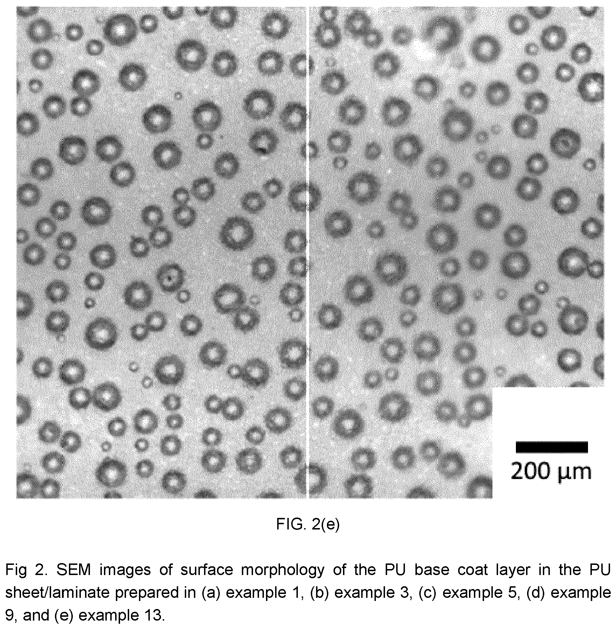

From the above results, it can be seen that the combination of vacuum-pumping the storage tanks of components (A) and (B) and controlling the relative humidity under certain degree during knife coating signficantly reduces bubbles in the PU base coat layers obtained. The process according to the present invention substantially reduces bubble size and bubble area in the PU base coat layer obtained, resulting in PU laminate products with high transmittance. Besides, haze of the PU laminate is also improved. In contrast, in the PU laminates prepared by the process without these two measures, the PU base coat layers contained large amounts of air bubbles, causing the transmittance and haze of the base coat layers deteriorate. These effects could further be recognized by the SEM images of the PU base coat layers prepared in the examples as shown in figure 2.

The structures, materials, compositions, and methods described herein are intended to be representative examples of the invention, and it will be understood that the scope of the invention is not limited by the scope of the examples. Those skilled in the art will recognize that the invention may be practiced with variations on the disclosed structures, materials, compositions and methods, and such variations are regarded as within the ambit of the invention.

## Claims

1. A process for preparing polyurethane sheet/laminate with reduced bubbles, which comprises the following steps:
(i) providing a release layer,
(ii) optionally applying one or more than one layer of a top coat to the release layer to form an overall top coat layer;
(iii) applying a polyurethane system to the release layer or the optional top coat layer to form a base coat layer;
(iv) optionally applying a substrate layer to the base coat layer;
(v) curing the polyurethane system to form a polyurethane layer; and
(vi) separating the release layer from the optional top coat layer or the polyurethane layer, to form a polyurethane sheet/laminate,
wherein the polyurethane system is formed by mixing of an isocyanate component (A) and a polyol composition component (B), and
wherein the components (A) and (B) are kept separately in tanks under vacuum before mixing with each other, and the relative humidity during the application of the polyurethane system in step (iii) is controlled to be 65% or below.

2. The process for preparing polyurethane sheet/laminate according to claim 1, wherein the polyurethane system is applied by knife coating in step (iii).

3. The process for preparing polyurethane sheet/laminate according to claim 1 or 2, wherein the pressure inside the tanks to store the components (A) and (B) is 500 mbar or below, preferably 200 mbar or below, more preferably 100 mbar or below, most preferably 60 mbar or below.

4. The process for preparing polyurethane sheet/laminate according to any of claims 1-3, wherein the relative humidity during the application of the polyurethane system in step (iii) is controlled to be 45% or below, preferably 35% or below, more preferably 20% or below.

5. The process for preparing polyurethane sheet/laminate according to any of claims 1-4, wherein the polyurethane system applied is subjected to drying in a dry tunnel, and the pressure inside the dry tunnel during drying is 400 mbar or below, preferably 200 mbar or below, more preferably 100 mbar or below.

6. The process for preparing polyurethane sheet/laminate according to any of claims 1-5, wherein the pressure inside the tanks to store the components (A) and (B) is 200 mbar or below, and the relative humidity during the application of the polyurethane system in step (iii) is controlled to be 35% or below.

7. The process for preparing polyurethane sheet/laminate according to any of claims 1-6, wherein the isocyanate component (A) comprises polyisocyanates selected from tolylene diisocyanate (TDI), diphenylmethane diisocyanate (MDI) and mixtures of diphenylmethane diisocyanate and polyphenylene polymethylene polyisocyanates (polymeric MDI).

8. The process for preparing polyurethane sheet/laminate according to any of claims 1-7, wherein the polyol composition component (B) comprises polyetherols and/or polyesterols, particularly polytetrahydrofuran.

9. The process for preparing polyurethane sheet/laminate according to any of claims 1-8, wherein the polyol composition component (B) further comprises a chain extender, water scavenger, fillers, catalyst, and/or other auxiliary and/or addition agents, wherein the catalyst in particular comprises a non-tin metal compound selected from at least one from zinc, bismuth or calcium contained organic metal catalyst.

10. The process for preparing polyurethane sheet/laminate according to any of claims 1-9, wherein the isocyanate index of the polyurethane system is in the range from 80 to 200, preferably from 90 to 160.

11. The process for preparing polyurethane sheet/laminate according to any of claims 1-10, wherein the polyurethane system is non-solvent polyurethane system.

12. Polyurethane sheet/laminate obtainable or obtained by the process according to any of claims 1-11, comprising
optionally a top coat,
a polyurethane base coat layer, and
optionally a substrate layer,
wherein the polyurethane base coat layer has a bubble area of less than 1.5%.

13. The polyurethane sheet/laminate according to claim 12, which has at least one of the following properties a)-e):
a) the polyurethane base coat layer has an average diameter of bubbles of less than 30 µm, preferably less than 20 µm, more preferably less than 10 µm;
b) the polyurethane base coat layer has an average bubble number per mm² of less than 5/mm², preferably less than 2/mm², and more preferably less than 1/mm²;
c) the polyurethane base coat layer has a bubble area of less than 1.5%, preferably less than 0.5%, and more preferably less than 0.1%;
d) the polyurethane in the base coat layer is non-solvent polyurethane;
e) the polyurethane base coat layer has a thickness in the range from 0.01 to 10 mm, preferably from 0.05 to 5 mm, more preferably from 0.1 to 2 mm,
wherein average diameter of bubbles, average bubble number per mm² and bublle area are determined by SEM (Scanning Electron Microscopy).

14. Synthetic leather made from the polyurethane sheet/laminate according to any of claims 12 or 13.

15. Use of the synthetic leather according to claim 14 as the upper or covering material in the application of apparel, accessories, cases, electronic devices, furniture, auto upholstery, sports items or leisure products.

## Patentansprüche

1. Verfahren zur Herstellung einer Polyurethanfolie/eines Polyurethanlaminats mit verminderten Blasen, das die folgenden Schritte umfasst:
(i) Bereitstellen einer Trennschicht,
(ii) gegebenenfalls Aufbringen einer oder mehr als einer Schicht eines Decklacks auf die Trennschicht unter Bildung einer gesamten Decklackschicht;
(iii) Aufbringen eines Polyurethansystems auf die Trennschicht bzw. die fakultative Decklackschicht zur Bildung einer Basislackschicht;
(iv) gegebenenfalls Aufbringen einer Substratschicht auf die Basislackschicht;
(v) Härten des Polyurethansystems zur Bildung einer Polyurethanschicht; und
(vi) Trennen der Trennschicht von der fakultativen Decklackschicht bzw. der Polyurethanschicht zur Bildung einer Polyurethanfolie/eines Polyurethanlaminats,
wobei das Polyurethansystem durch Mischen einer Isocyanatkomponente (A) und einer Polyolzusammensetzungskomponente (B) gebildet wird und
wobei die Komponenten (A) und (B) vor dem Mischen miteinander separat in Tanks unter Vakuum gehalten werden und die relative Feuchte während des Aufbringens des Polyurethansystems in Schritt (iii) auf 65 % oder weniger eingestellt wird.

2. Verfahren zur Herstellung der Polyurethanfolie/des Polyurethanlaminats nach Anspruch 1, wobei das Polyurethansystem in Schritt (iii) durch Rakeln aufgebracht wird.

3. Verfahren zur Herstellung der Polyurethanfolie/des Polyurethanlaminats nach Anspruch 1 oder 2, wobei der Druck in den Tanks zur Lagerung der Komponenten (A) und (B) 500 mbar oder weniger, vorzugsweise 200 mbar oder weniger, weiter bevorzugt 100 mbar oder weniger, ganz besonders bevorzugt 60 mbar oder weniger, beträgt.

4. Verfahren zur Herstellung der Polyurethanfolie/des Polyurethanlaminats nach einem der Ansprüche 1-3, wobei die relative Feuchte während des Aufbringens des Polyurethansystems in Schritt (iii) auf 45 % oder weniger, vorzugsweise 35 % oder weniger, weiter bevorzugt 20 % oder weniger, eingestellt wird.

5. Verfahren zur Herstellung der Polyurethanfolie/des Polyurethanlaminats nach einem der Ansprüche 1-4, wobei das aufgebrachte Polyurethansystem einer Trocknung in einem Trockentunnel unterworfen wird und der Druck in dem Trockentunnel während des Trocknens 400 mbar oder weniger, vorzugsweise 200 mbar oder weniger, weiter bevorzugt 100 mbar oder weniger, beträgt.

6. Verfahren zur Herstellung der Polyurethanfolie/des Polyurethanlaminats nach einem der Ansprüche 1-5, wobei der Druck in den Tanks zur Lagerung der Komponenten (A) und (B) 200 mbar oder weniger beträgt und die relative Feuchte während des Aufbringens des Polyurethansystems in Schritt (iii) auf 35 % oder weniger eingestellt wird.

7. Verfahren zur Herstellung der Polyurethanfolie/des Polyurethanlaminats nach einem der Ansprüche 1-6, wobei die Isocyanatkomponente (A) Polyisocyanate umfasst, die aus Tolylendiisocyanat (TDI), Diphenylmethandiisocyanate (MDI) und Gemischen von Diphenylmethandiisocyanaten und Polyphenylenpolymethylenpolyisocyanaten (polymerem MDI) ausgewählt ist.

8. Verfahren zur Herstellung der Polyurethanfolie/des Polyurethanlaminats nach einem der Ansprüche 1-7, wobei die Polyolzusammensetzungskomponente (B) Polyetherole und/oder Polyesterole, insbesondere Polytetrahydrofuran, umfasst.

9. Verfahren zur Herstellung der Polyurethanfolie/des Polyurethanlaminats nach einem der Ansprüche 1-8, wobei die Polyolzusammensetzungskomponente (B) ferner ein Kettenverlängerungsmittel, einen Wasserfänger, Füllstoffe, einen Katalysator und/oder andere Hilfs- und/oder Zusatzstoffe umfasst, wobei der Katalysator insbesondere eine Nichtzinnmetallverbindung umfasst, die aus einem Zink, Bismut und/oder Calcium enthaltenden organischen Metallkatalysator ausgewählt ist.

10. Verfahren zur Herstellung der Polyurethanfolie/des Polyurethanlaminats nach einem der Ansprüche 1-9, wobei der Isocyanatindex des Polyurethansystems im Bereich von 80 bis 200, vorzugsweise von 90 bis 160, liegt.

11. Verfahren zur Herstellung der Polyurethanfolie/des Polyurethanlaminats nach einem der Ansprüche 1-10, wobei es sich bei dem Polyurethansystem um ein Nicht-Lösungsmittel-Polyurethansystem handelt.

12. Polyurethanfolie/Polyurethanlaminat, erhältlich oder erhalten durch das Verfahren nach einem der Ansprüche 1-11, umfassend
gegebenenfalls einen Decklack,
eine Polyurethan-Basislackschicht und
gegebenenfalls eine Substratschicht,
wobei die Polyurethan-Basislackschicht eine Blasenfläche von weniger als 1,5 % aufweist.

13. Polyurethanfolie/Polyurethanlaminat nach Anspruch 12, die mindestens eine der folgenden Eigenschaften a)-e) aufweist:
a) die Polyurethan-Basislackschicht weist einen durchschnittlichen Blasendurchmesser von weniger als 30 µm, vorzugsweise weniger als 20 µm, weiter bevorzugt weniger als 10 µm, auf;
b) die Polyurethan-Basislackschicht weist eine durchschnittliche Blasenzahl pro mm² von weniger als 5/mm², vorzugsweise weniger als 2/mm² und weiter bevorzugt weniger als 1/mm² auf;
c) die Polyurethan-Basislackschicht weist eine Blasenfläche von weniger als 1,5 %, vorzugsweise weniger als 0,5 % und weiter bevorzugt weniger als 0,1 % auf;
d) bei dem Polyurethan in der Basislackschicht handelt es sich um ein Nicht-Lösungsmittel-Polyurethan;
e) die Polyurethan-Basislackschicht weist eine Dicke im Bereich von 0,01 bis 10 mm, vorzugsweise von 0,05 bis 5 mm, weiter bevorzugt von 0,1 bis 2 mm, auf,
wobei der durchschnittliche Blasendurchmesser, die durchschnittliche Blasenzahl pro mm² und die Blasenfläche durch REM (Rasterelektronenmikroskopie) bestimmt werden.

14. Kunstleder, hergestellt aus der Polyurethanfolie/dem Polyurethanlaminat nach Anspruch 12 oder 13.

15. Verwendung des Kunstleders nach Anspruch 14 als Ober- oder Abdeckmaterial bei der Anwendung Bekleidung, Accessoires, Taschen, elektronischen Geräten, Möbeln, Autopolsterung, Sportartikeln oder Freizeitprodukten.

## Revendications

1. Procédé de préparation de feuille/stratifié de polyuréthane à bulles réduites, qui comprend les étapes suivantes :
(i) l'utilisation d'une couche antiadhésive,
(ii) éventuellement l'application d'une ou plusieurs couches d'un revêtement de finition sur la couche antiadhésive pour former une couche de revêtement de finition globale ;
(iii) l'application d'un système de polyuréthane sur la couche antiadhésive ou la couche de revêtement de finition éventuelle pour former une couche de revêtement de base ;
(iv) éventuellement l'application d'une couche de substrat sur la couche de revêtement de base ;
(v) le durcissement du système de polyuréthane pour former une couche de polyuréthane ; et
(vi) la séparation de la couche antiadhésive de la couche de revêtement de finition éventuelle ou de la couche de polyuréthane, pour former une feuille/un stratifié de polyuréthane,
dans lequel le système de polyuréthane est formé par mélange d'un composant isocyanate (A) et d'un composant composition de polyols (B) et
dans lequel les composants (A) et (B) sont gardés séparément dans des réservoirs sous vide avant le mélange de l'un avec l'autre et l'humidité relative pendant l'application du système de polyuréthane à l'étape (iii) est réglée pour être inférieure ou égale à 65 %.

2. Procédé de préparation de feuille/stratifié de polyuréthane selon la revendication 1, dans lequel le système de polyuréthane est appliqué par revêtement à la racle à l'étape (iii).

3. Procédé de préparation de feuille/stratifié de polyuréthane selon la revendication 1 ou 2, dans lequel la pression à l'intérieur des réservoirs pour stocker les composants (A) et (B) est inférieure ou égale à 500 mbar, de préférence inférieure ou égale à 200 mbar, plus préférablement inférieure ou égale à 100 mbar, le plus préférablement inférieure ou égale à 60 mbar.

4. Procédé de préparation de feuille/stratifié de polyuréthane selon l'une quelconque des revendications 1 à 3, dans lequel l'humidité relative pendant l'application du système de polyuréthane à l'étape (iii) est réglée pour être inférieure ou égale à 45 %, de préférence inférieure ou égale à 35 %, plus préférablement inférieure ou égale à 20 %.

5. Procédé de préparation de feuille/stratifié de polyuréthane selon l'une quelconque des revendications 1 à 4, dans lequel le système de polyuréthane appliqué est soumis à un séchage dans un tunnel de séchage et la pression à l'intérieur du tunnel de séchage pendant le séchage est inférieure ou égale à 400 mbar, de préférence inférieure ou égale à 200 mbar, plus préférablement inférieure ou égale à 100 mbar.

6. Procédé de préparation de feuille/stratifié de polyuréthane selon l'une quelconque des revendications 1 à 5, dans lequel la pression à l'intérieur des réservoirs pour stocker les composants (A) et (B) est inférieure ou égale à 200 mbar et l'humidité relative pendant l'application du système de polyuréthane à l'étape (iii) est réglée pour être inférieure ou égale à 35 %.

7. Procédé de préparation de feuille/stratifié de polyuréthane selon l'une quelconque des revendications 1 à 6, dans lequel le composant isocyanate (A) comprend des polyisocyanates choisis parmi le diisocyanate de tolylène (TDI), le diisocyanate de diphénylméthane (MDI) et des mélanges de diisocyanate de diphénylméthane et de polyisocyanates de polyméthylène-polyphénylène (MDI polymère).

8. Procédé de préparation de feuille/stratifié de polyuréthane selon l'une quelconque des revendications 1 à 7, dans lequel le composant composition de polyols (B) comprend des polyols de polyéthers et/ou des polyols de polyesters, en particulier du polytétrahydrofurane.

9. Procédé de préparation de feuille/stratifié de polyuréthane selon l'une quelconque des revendications 1 à 8, dans lequel le composant composition de polyols (B) comprend en outre un allongeur de chaîne, un piégeur d'eau, des charges, un catalyseur et/ou d'autres agents auxiliaires et/ou additifs, dans lequel le catalyseur comprend en particulier un composé métallique sans étain choisi parmi au moins l'un du zinc, du bismuth ou du calcium contenu dans un catalyseur organométallique.

10. Procédé de préparation de feuille/stratifié de polyuréthane selon l'une quelconque des revendications 1 à 9, dans lequel l'indice d'isocyanate du système de polyuréthane est dans la plage allant de 80 à 200, de préférence de 90 à 160.

11. Procédé de préparation de feuille/stratifié de polyuréthane selon l'une quelconque des revendications 1 à 10, dans lequel le système de polyuréthane est un système de polyuréthane sans solvant.

12. Feuille/stratifié de polyuréthane pouvant être obtenu(e) ou obtenu(e) par le procédé selon l'une quelconque des revendications 1 à 11, comprenant éventuellement un revêtement de finition,
une couche de revêtement de base en polyuréthane et éventuellement une couche de substrat,
dans lequel/laquelle la couche de revêtement de base en polyuréthane a une surface des bulles de moins de 1,5 %.

13. Feuille/stratifié de polyuréthane selon la revendication 12, qui a au moins l'une des propriétés a) à e) suivantes :
a) la couche de revêtement de base en polyuréthane a un diamètre moyen des bulles de moins de 30 µm, de préférence de moins de 20 µm, plus préférablement de moins de 10 µm ;
b) la couche de revêtement de base en polyuréthane a un nombre moyen de bulles par mm² de moins de 5/mm², de préférence de moins de 2/mm² et plus préférablement de moins de 1/mm² ;
c) la couche de revêtement de base en polyuréthane a une surface des bulles de moins de 1,5 %, de préférence de moins de 0,5 % et plus préférablement de moins de 0,1 % ;
d) le polyuréthane dans la couche de revêtement de base est du polyuréthane sans solvant ;
e) la couche de revêtement de base en polyuréthane a une épaisseur dans la plage allant de 0,01 à 10 mm, de préférence de 0,05 à 5 mm, plus préférablement de 0,1 à 2 mm,
le diamètre moyen des bulles, le nombre moyen de bulles par mm² et la surface des bulles étant déterminés par MEB (microscopie électronique à balayage).

14. Cuir synthétique fabriqué à partir de la feuille/du stratifié de polyuréthane selon l'une quelconque des revendications 12 ou 13.

15. Utilisation du cuir synthétique selon la revendication 14 en tant que matériau supérieur ou de recouvrement dans l'application de vêtements, d'accessoires, d'étuis, de dispositifs électroniques, de meubles, de garnissage intérieur pour les automobiles, d'articles de sport ou de produits de loisirs.
